# FASCICULE DE BREVET EUROPEEN

(11) **EP 1 568 439 B1**
(45) Date de publication et mention de la délivrance du brevet: **17.01.2007**
(21) Numéro de dépôt: 05290419.0
(22) Date de dépôt: 24.02.2005
(51) Int. Cl.: B23Q 9/02, B23Q 35/10, B23P 6/00

(54) **Procédé et dispositif pour la réparation de dentures d'engrenages**
Verfahren und Vorrichtung zur Wiederherstellung von Zähnen bei Zahnrädern
Process and device for repairing gear teeth

(30) Priorité: 25.02.2004 FR 0401908
(43) Date de publication de la demande: 31.08.2005
(73) Titulaire: Diag-Metal, 52170 Rachecourt sur Marne (FR)
(72) Inventeur: Stauder, François, 52300 Joinville (FR); Stauder, Michel, 51300 Saint Amand sur Fion (FR); Lange, Michel, 52230 Poissons (FR)
(74) Mandataire: L'Helgoualch, Jean

(56) Documents cités:
- US-A- 4 621 427
- US-A- 5 032 051
- US-A- 5 161 291
- US-A- 5 233 744

## Description

La présente invention concerne un dispositif mécanique pour la réparation des engrenages, et plus particulièrement un dispositif mécanique destiné à réparer la denture d'un engrenage de grande dimension en acier ou en fonte, sur site et sans démontage.

Dans divers domaines techniques, on utilise des machines et appareillages comprenant des engrenages dont les dentures peuvent s'user jusqu'à un degré auquel le fonctionnement de la machine se détériore et peut souvent s'interrompre, même dans le cas de dentures métalliques présentant une bonne résistance à l'usure. Il est parfois nécessaire de remplacer les engrenages usés ou endommagés, mais il est généralement préférable de les réparer, afin d'en prolonger la durée de vie et d'améliorer la rentabilité de la machine, surtout dans le cas d'engrenages de grandes dimensions et de couronnes d'entraînement en acier ou en fonte. Toutefois, les réparations sur place impliquent généralement le démontage de l'engrenage ou de la couronne, ce qui a pour conséquence l'arrêt du fonctionnement de la machine pendant tout le temps nécessaire au démontage, à la réparation et au remontage ultérieur de l'élément réparé. Ceci a pour conséquence d'importantes pertes de temps dues à l'immobilisation des machines, qui diminuent sensiblement le rendement économique des machines concernées.

On connaît dans la technique des machines destinées à l'usinage ou à la réparation d'engrenages, mais les machines usuelles requièrent de démonter l'engrenage. D'autres dispositifs simples existent, par exemple pour permettre un meulage manuel, mais ils restent cependant limités à des réparations ponctuelles et ne peuvent pas être utilisés efficacement lorsqu'une grande précision est requise, et qu'il faut réaliser des opérations répétitives identiques sur plusieurs dentures. Le brevet US 5.161.291 décrit un appareillage ajustable qui évite l'inconvénient ci-dessus en s'adaptant sur le rotor ou le stator d'un générateur électrique au moyen d'électro-aimants, pour assurer la réparation de diverses dentures de ses engrenages. Un autre exemple de machine de réparation d'engrenages sur place, comportant un plateau, mobile dans deux directions et portant des outils, est décrit dans le brevet US 5.233.744. Cependant, ces appareillages restent complexes et le réglage de leur positionnement est délicat.

Il est donc souhaitable de pouvoir disposer d'une technique, et d'un outillage adapté, qui permettent de limiter les temps d'immobilisation des machines mécaniques pendant les réparations des engrenages, tout en assurant une qualité satisfaisante des réparations.

La présente invention a précisément pour objet un procédé de réparation d'engrenages sur site, plus particulièrement dans le cas d'engrenages à dentures de grande dimension, assurant une bonne qualité des réparations.

L'invention a également pour objet un dispositif permettant d'effectuer la réparation d'engrenages sur site dans de bonnes conditions d'efficacité.

La présente invention a encore pour objet un dispositif de réparation sur site de dentures d'engrenage procurant une excellente qualité de précision et de reproductibilité.

Le procédé suivant la présente invention consiste à mettre en position isostatique un dispositif mécanique adapté à la réparation des dents de l'engrenage, en combinant des points d'appui, des points de référence et des points de blocage du dispositif mécanique sur la denture de l'engrenage, et à utiliser ces points pour assurer le retaillage des dents à réparer.

Le procédé comprend les étapes consistant à : prendre au moins deux appuis sur la tête d'une dent située avant la dent à réparer et au moins un appui sur une dent située après la dent à réparer, ou inversement, prendre deux appuis sur le flanc et un appui sur le côté d'une dent située avant la dent à réparer, à bloquer le dispositif par au moins trois points de blocage situés deux sous ladite dent avant la dent à réparer et un sous une dent située après, et à utiliser le profil d'une dent voisine de la dent à réparer, et/ou un profil théorique, comme référence pour guider un outillage de coupe et réparer la dent à réparer.

Suivant une forme préférentielle de réalisation, le procédé de l'invention comprend les étapes consistant à : prendre au moins trois appuis sur la tête d'au moins une dent située avant la dent à réparer, au moins un appui sur le côté d'une dent située avant la dent à réparer, et au moins deux appuis sur le flanc d'une dent de référence, bloquer le dispositif par au moins cinq points de blocage situés en opposition par rapport aux points d'appui, et utiliser le profil de la dent de référence et/ou le profil théorique matérialisé par un gabarit pour guider un outillage de coupe et retailler la dent à réparer.

Le dispositif conforme à la présente invention comprend un outil de coupe orientable susceptible d'être déplacé suivant plusieurs axes, et il comprend des moyens d'appui et des moyens de blocage sur l'engrenage, susceptibles d'être mis en place de telle sorte qu'au moins deux moyens d'appui soient placés sur la tête d'une dent située avant la dent à réparer et au moins un moyen d'appui sur la tête d'une autre dent située avant la dent à réparer, et en ce que les moyens de blocage du dispositif sont amovibles et placés sous la denture, au droit desdits moyens d'appui, deux moyens d'appui au moins étant placés sur le profil d'une dent située avant la dent à réparer, et un moyen d'appui sur le côté d'une dent située avant la dent à réparer.

Suivant une forme avantageuse de réalisation, le dispositif de l'invention comprend un outil de coupe orientable susceptible d'être déplacé suivant plusieurs axes, comprenant des moyens d'appui et des moyens de blocage sur l'engrenage, susceptibles d'être mis en place de telle sorte qu'au moins trois moyens d'appui soient placés sur la tête d'au moins une dent située avant la dent à réparer, au moins un moyen d'appui soit placé sur le côté d'une dent située avant la dent à réparer, et au moins deux moyens d'appuis soient placés sur le flanc d'une dent de référence, ainsi que des moyens amovibles de blocage placés sous la denture et sur le côté de la denture, au droit d'au moins plusieurs desdits moyens d'appui.

Le dispositif de la présente invention permet de garantir à la fois une bonne précision de la réparation ainsi qu'une parfaite régularité sur toute la largeur de la denture, mais aussi une bonne répétitivité assurant le respect du pas (de base, ou autre) de la denture, tout en assurant des temps de cycle économiquement compétitifs.

Le dispositif suivant la présente invention est tout particulièrement adapté aux réparations de dentures d'engrenages de grandes dimensions. Par engrenages de grandes dimensions, on entend des engrenages ayant un diamètre généralement supérieur à 2 m environ, et de préférence supérieur à 3 m. Il permet ainsi de réparer dans de bonnes conditions une dent partiellement ou totalement cassée, en la supprimant par usinage, en la reconstituant ensuite par soudage et en retaillant la dent ainsi reconstituée conformément au profil d'origine mais en s'adaptant à l'usure des autres dents de l'engrenage. Il devient ainsi possible non seulement de réparer une denture d'engrenage détériorée ou cassée, mais aussi d'obtenir, après réparation, une denture de profil adapté à l'usure des autres dents du même engrenage, préservant ainsi la cohérence générale de la denture et facilitant la régularité de fonctionnement de l'engrenage.

Le dispositif de l'invention permet aussi de corriger les profils de fonctionnement usés par retaillage de toute la denture afin de retrouver le profil d'origine en respectant le pas de base de l'engrenage, que les dentures aient été rechargées ou non par soudage. Les phénomènes connus de pitting et d'écaillage, ou les marquages dus à un grippage peuvent être supprimés par le retaillage de toute la denture, dans les mêmes conditions. De même, un retaillage de toute la denture peut être réalisé pour compenser une détérioration du pas de base de l'engrenage survenu accidentellement.

Le dispositif conforme à la présente invention permet encore de supprimer des déformations en pieds de dents (ressauts) en restaurant un rayon de courbure fonctionnel en pied de denture (troncoïde de raccordement), ou de modifier des chanfreins en tête de denture, ou encore de réaliser des entrées et sorties de dentures en fonction de conditions particulières.

De telles opérations de réparation ou de rectification de dentures peuvent être faites sur diverses couronnes d'engrenages en acier ou en fonte, fabriquées par mécano-soudage ou par fonderie. Les dentures susceptibles d'être réparées ou retaillées par la technique de l'invention sont généralement en acier ou en fonte, présentant une dureté Brinell comprise entre 120 HB et 400 HB environ. En cas de rectification de denture, la dureté peut atteindre 60 Rockwell (HRC).

Le dispositif de l'invention est tout particulièrement adapté au retaillage de couronnes dentées à denture droite de diamètre supérieur à 3 mètres environ, le module de la denture sera compris entre 10 et 50. La largeur de la denture est indifférente mais elle est de préférence comprise entre 300 et 1.000 mm.

Les caractéristiques et avantages de la présente invention apparaîtront plus en détail dans l'exemple de réalisation décrit ci-après, en référence aux dessins annexés qui représentent :
Figure 1 : une vue schématique (vues de face, de dessus et de côté) d'un ensemble comprenant le dispositif de la présente invention.
Figure 2 : une vue schématique Gauche en trois dimensions des points d'appuis et de serrage du dispositif de l'invention sur des dentures d'engrenage.
Figure 3 : une vue schématique Droite en trois dimensions complémentaire de la Figure 2.

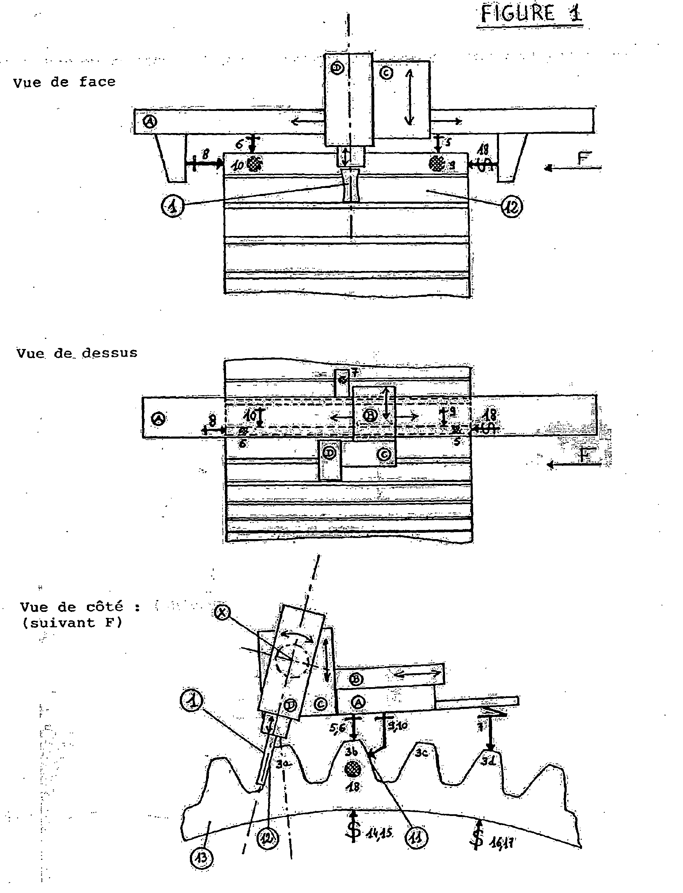

Comme le montre la Figure 1, l'ensemble constituant le dispositif de l'invention comprend quatre modules complémentaires, comme indiqué ci-après. Cet ensemble peut comporter par exemple une retailleuse destinée à réparer la denture d'un engrenage présentant une couronne de 4 m de diamètre comportant des dents de 300 mm de large.

Le module (A) est constitué par une glissière de guidage qui vient se fixer sur les dentures de l'engrenage à réparer, comme indiqué plus loin. La course de cette glissière peut être par exemple de 1.200 mm. Sur cette glissière peut coulisser un deuxième module (B) constitué par une glissière perpendiculaire à la première, le coulissement pouvant être commandé par un moto-réducteur à variateur électronique de type usuel (non représenté). Sur cette glissière (B) peut coulisser le module (C) suivant une direction perpendiculaire à celle de la glissière (A), le réglage du déplacement étant effectué de manière précise par une règle numérique assurant une précision de 0,01 mm. Le module (C) est lui-même constitué par une glissière verticale sur laquelle coulisse le module (D) portant la broche d'usinage.

Cette broche d'usinage peut non seulement coulisser suivant une direction sensiblement verticale sur la glissière du module (C), mais elle est en outre orientable suivant l'axe horizontal (X) pour que l'outil (1) (représentée schématiquement) soit orientée de manière appropriée. Le positionnement de l'outil (1) peut aussi être ajusté longitudinalement au moyen d'une règle numérique pour les réglages précis.

L'outillage porté par la broche (D) est ainsi positionné de manière appropriée pour venir en contact avec la denture à réparer. Cet outillage est de type usuel et peut être un outillage de coupe en acier rapide revêtu ou non ou en carbure métallique, monobloc ou à pastilles, par exemple un outillage disponible dans le commerce sous les marques SAFETY, ou autres, comportant une fraise cylindrique à deux tailles, de diamètre 20 ou 22 mm, série longue, à 4 ou 6 dents. Si nécessaire, ces outillages de base peuvent ensuite être adaptés par un réaffûtage au moyen d'une affûteuse à commande numérique, suivant le profil théorique (développante de cercle) de la denture à réparer.

La Figure 1 (vue de côté) montre le profil de quatre dents successives (3a, 3b, 3c, 3d,) d'une denture d'engrenage. Ce nombre de quatre dents peut varier en fonction de la taille de celles-ci.

Le dispositif de retailleuse représenté schématiquement sur la Figure 1 est mis en place par exemple, sur les deuxième et quatrième dents, (3b) et (3d) respectivement, suivant les positions indiquées sur les Figures 1, 2 et 3. La première dent (3a) est la dent dont le profil (12) doit être reconstitué par le dispositif de l'invention, tandis que la dent (3b) sert de référence d'appuis pour la reconstitution du profil et la conservation du pas.

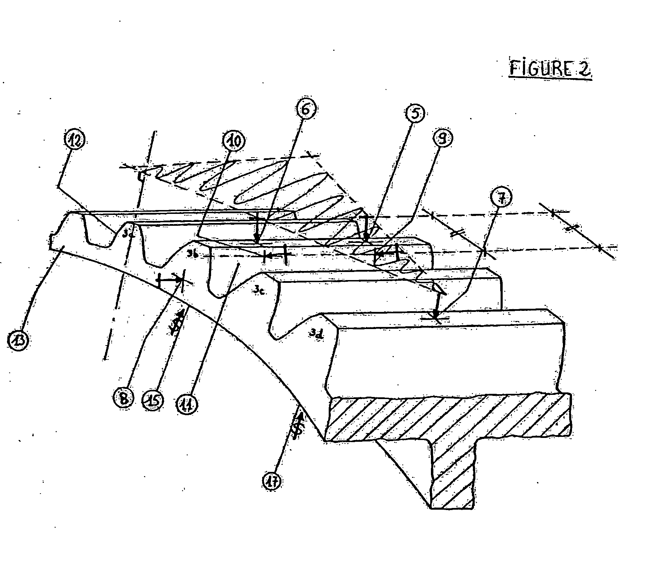

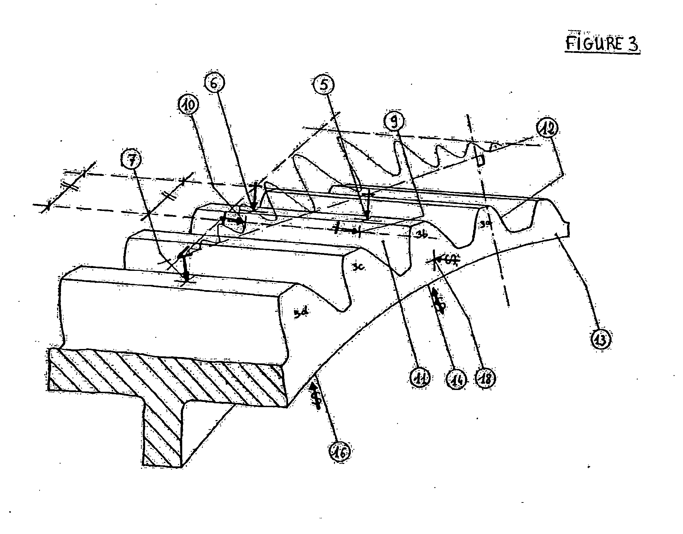

La retailleuse prend appui sur la tête des dents (3b) et (3d) aux positions indiquées schématiquement par les flèches (5), (6) et (7) respectivement. Les Figures 2 et 3 montrent de manière schématique le flanc de référence de la dent (3b) et le positionnement des points d'appui de la retailleuse sur cette même dent. Un point d'appui est positionné sur le côté de la dent (3b) à la position indiquée par la flèche (8) et deux points d'appuis aux positions indiquées par les flèches (9) et (10) sur le flanc de cette même dent (3b), à proximité de la tête de la dent.

Les points d'appui (5), (6) et (7) permettent d'assurer le dégauchissage dans le plan horizontal et l'alignement du module (B) de la Figure 1 suivant une ligne perpendiculaire à l'axe de la dent (voir figures 2 et 3). Le point d'appui (8) sert d'arrêt en translation de la retailleuse. Enfin, les points d'appui (9) et (10) permettent d'obtenir un alignement parallèle au flanc de référence (11) de la dent (3b) afin de reconstituer le profil (12) de la dent (3a) à réparer (voir figures 2 et 3).

Ces points d'appui de la retailleuse sur l'engrenage sont constitués par des cales intermédiaires en acier trempé, rectifiées, fixées, par exemple vissées, sur la retailleuse.

Les Figures 2 et 3 montrent les points de blocage de la retailleuse en position sur les dents de l'engrenage.

Des points de blocage sont positionnés sur la face inférieure de la jante (13) aux positions repérées par les flèches (14, 15) et (16, 17) qui sont au droit des points d'appui (5), (6) et (7) sur la tête des dents, respectivement. Ces points de blocage sont dédoublés en (14) et (15) correspondant aux points d'appui (5) et (6), et (16) et (17) correspondant au point d'appui (7), respectivement, comme le montrent les Figures 2 et 3. Un point de blocage est placé sur le côté de la denture (3b) à la position repérée par la flèche (18), au droit du point d'appui (8) sur cette même dent (3b).

Une fois la retailleuse ainsi mise en place, l'outillage de coupe est actionné pour retailler le profil du flanc (12) de la dent (3a) représenté sur les Figures 1, 2 et 3 puis lorsque cette opération est terminée, la retailleuse est débridée et déplacée du nombre de dents nécessaire pour être mise en place au- niveau de la dent suivante à réparer.

## Revendications

1. Procédé de réparation de dentures d'engrenages sur site, comprenant les étapes consistant à : prendre au moins deux appuis sur la tête d'une dent (3b) située avant la dent à réparer (3a) et au moins un appui sur une autre dent (3d) située avant la dent à réparer, prendre deux appuis sur le flanc et un appui sur le côté d'une dent (3b) située avant la dent à réparer (3a), à bloquer le dispositif par au moins trois points de blocage situés deux sous ladite dent (3b) avant la dent à réparer et une sous l'autre dent (3d) située avant, et à utiliser le profil d'une dent voisine de la dent à réparer comme référence d'appuis pour guider un outillage de coupe et retailler la dent détériorée.

2. Procédé selon la revendication 1, **caractérisé en ce qu**'il comprend les étapes consistant à : prendre au moins trois appuis sur la tête d'au moins une dent située avant la dent à réparer, au moins un appui sur le côté d'une dent située avant la dent à réparer, et au moins deux appuis sur le flanc d'une dent de référence, bloquer le dispositif par au moins cinq points de blocage situés en opposition par rapport aux points d'appui, et utiliser le profil de la dent de référence et/ou le profil théorique matérialisé par un gabarit pour guider un outillage de coupe et retailler la dent à réparer.

3. Procédé selon l'une quelconque des revendications précédentes, **caractérisé en ce qu**'il est adapté à la réparation de dentures en acier ou en fonte, présentant une dureté Brinell comprise entre 120 et 400 environ.

4. Procédé selon l'une quelconque des revendications précédentes, **caractérisé en ce qu**'il est adapté au retaillage de couronnes dentées à denture droite de diamètre supérieur à 3 mètres environ, et de module de denture compris entre 10 et 50.

5. Dispositif mécanique pour la réparation de dentures d'engrenages sur site, comprenant un outil de coupe orientable susceptible d'être déplacé suivant plusieurs axes, comprenant des moyens d'appui et des moyens de blocage sur l'engrenage, susceptibles d'être mis en place de telle sorte que au moins deux moyens d'appui (5, 6) soient placés sur la tête d'une dent (3b) située avant la dent à réparer (3a) **caractérisé en ce que** au moins un moyen d'appui (7) sur la tête d'une autre dent (3d) est située avant la dent à réparer, que les moyens de blocage (14, 15, 16, 17) du dispositif sont amovibles et placés sous la denture, au droit desdits moyens d'appui, deux moyens d'appui au moins étant placés sur le profil d'une dent située avant ou après la dent à réparer, et un moyen d'appui sur le côté d'une dent située avant la dent à réparer.

6. Dispositif mécanique selon la revendication 5, **caractérisé en ce qu**'il comprend un outil de coupe orientable susceptible d'être déplacé suivant plusieurs axes, comprenant des moyens d'appui et des moyens de blocage sur l'engrenage, susceptibles d'être mis en place de telle sorte qu'au moins trois moyens d'appui soient placés sur la tête d'au moins une dent située avant la dent à réparer, au moins un moyen d'appui soit placé sur le côté d'une dent située avant la dent à réparer, et au moins deux moyens d'appuis soient placés sur le flanc d'une dent de référence, ainsi que des moyens amovibles de blocage placés sous la denture et sur le côté de la denture, au droit d'au moins plusieurs desdits moyens d'appui.

7. Dispositif mécanique selon l'une quelconque des revendications 5 et 6, **caractérisé en ce que** les points d'appui sur l'engrenage sont constitués par des cales intermédiaires en acier fixées sur la retailleuse.

## Claims

1. Method of repairing gear teeth on site, comprising the steps consisting in: taking at least two resting points on the tip of a tooth (3b) situated in front of the tooth (3a) to be repaired and at least one resting point on another tooth (3d) situated in front of the tooth to be repaired, taking two resting points on the flank and one resting point on the side of a tooth (3b) situated in front of the tooth (3a) to be repaired, immobilizing the device via at least three immobilization points situated two under the said tooth (3b) in front of the tooth to be repaired and one under the other tooth (3d) situated in front, and using the profile of a tooth adjacent to the tooth to be repaired as a resting point reference to guide a tool for cutting and reshaping the damaged tooth.

2. Method according to Claim 1, **characterized in that** it comprises the steps consisting in: taking at least three resting points on the tip of at least one tooth situated in front of the tooth to be repaired, at least one resting point on the side of a tooth situated in front of the tooth to be repaired, and at least two resting points on the flank of a reference tooth, immobilizing the device via at least five immobilization points situated in opposition relative to the resting points, and using the profile of the reference tooth and/or the theoretical profile materialized by a template to guide a tool for cutting and reshaping the tooth to be repaired.

3. Method according to any one of the preceding claims, **characterized in that** it is suitable for the repair of steel or cast iron teeth having a Brinell hardness lying between approximately 120 and 400.

4. Method according to any one of the preceding claims, **characterized in that** it is suitable for reshaping gear wheels with spur gears with a diameter greater than approximately 3 metres and with a gear modulus lying between 10 and 50.

5. Mechanical device for repairing gear teeth on site, comprising an orientable cutting tool capable of being moved along several axes, comprising means of resting and means of immobilization on the gear, capable of being installed so that at least two resting means (5, 6) are placed on the tip of a tooth (3b) situated in front of the tooth (3a) to be repaired, **characterized in that** at least one means (7) of resting on the tip of another tooth (3d) is situated in front of the tooth to be repaired, **in that** the means (14, 15, 16, 17) of immobilizing the device are removable and placed beneath the teeth, level with the said resting means, at least two resting means being placed on the profile of a tooth situated in front of or behind the tooth to be repaired, and one resting means on the side of a tooth situated in front of the tooth to be repaired.

6. Mechanical device according to Claim 5, **characterized in that** it comprises an orientable cutting tool capable of being moved along several axes, comprising means of resting and means of immobilization on the gear, capable of being installed so that at least three resting means are placed on the tip of at least one tooth situated in front of the tooth to be repaired, at least one resting means is placed on the side of a tooth situated in front of the tooth to be repaired, and at least two resting means are placed on the flank of a reference tooth, and removable immobilization means placed beneath the teeth and on the side of the teeth, level with at least several of the said resting means.

7. Mechanical device according to any one of Claims 5 and 6, **characterized in that** the resting points on the gear consist of steel intermediate blocks attached to the recutting tool.

## Patentansprüche

1. Verfahren zur Reparatur von Zahnrädern vor Ort, umfassend die folgenden Schritte: Aufstützen auf mindestens zwei Auflagepunkte auf dem Kopf eines Zahns (3b), der sich vor dem zu reparierenden Zahn (3a) befindet, und Aufstützen auf mindestens einen Auflagepunkt auf einem anderen, sich vor dem zu reparierenden Zahn befindlichen Zahn (3d), Aufstützen auf zwei Auflagepunkte auf der Flanke und Aufstützen auf einen Auflagepunkt auf der Seite eines Zahns (3b), der sich vor dem zu reparierenden Zahn (3a) befindet, um die Vorrichtung mit zumindest drei Arretierungspunkten zu arretieren, wobei sich zwei davon unterhalb des Zahns (3b), vor dem zu reparierendem Zahn (3a) befinden und einer unterhalb des anderen Zahns (3d), vor dem zu reparierendem Zahn, angeordnet ist, und um das Profil eines benachbart zum zu reparierenden Zahn angeordneten Zahns als Referenzauflagepunkte zum Führen eines Schneidwerkzeugs und zum Wiederherstellen der Gestalt des beschädigten Zahns zu verwenden.

2. Verfahren nach Anspruch 1, **dadurch gekennzeichnet, dass** dieses folgende Schritte umfasst: Aufstützen auf mindestens drei Auflagepunkte auf dem Kopf zumindest eines, sich vor dem zu reparierenden Zahn befindlichen Zahns, Aufstützen auf mindestens einen Auflagepunkt auf der Seite eines Zahns, der sich vor dem zu reparierenden Zahn befindet, und Aufstützen auf zumindest zwei Auflagepunkte auf der Flanke eines Referenzzahns, sowie das Arretieren der Vorrichtung mit mindestens fünf Arretierungspunkten, die den Auflagepunkten gegenüberliegend angeordnet sind, und das Verwenden des Profils des Referenzzahns und/oder des in Form einer Schablone zur Verfügung stehenden Profils zum Führen eines Schneidwerkzeugs und zum Wiederherstellen der Gestalt des zu reparierenden Zahns.

3. Verfahren nach einem der vorangegangenen Ansprüche, **dadurch gekennzeichnet, dass** dieses zur Reparatur von Verzahnungen aus Stahl oder aus Gusseisen, welche eine Brinellhärte zwischen etwa 120 und 400 aufweisen, geeignet ist.

4. Verfahren nach einem der vorangegangenen Ansprüche, **dadurch gekennzeichnet, dass** dieses zum Wiederherstellen der Gestalt geradverzahnter Zahnkränze, welche über einen Durchmesser von mehr als ungefähr 3 Metern und über einem Zahnmodul zwischen 10 und 50 verfügen, geeignet ist.

5. Mechanische Vorrichtung zur Reparatur von Zahnrädern vor Ort, umfassend ein ausrichtbares Schneidwerkzeug, welches entlang verschiedener Achsen verschoben werden kann und Auflagemittel sowie Arretierungsmittel zum Aufstützen auf das Zahnrad umfasst, die derart platziert werden können, dass zumindest zwei Auflagemittel (5, 6) auf dem Kopf eines Zahns (3b), welcher sich vor dem zu reparierenden Zahn (3a) befindet, anordenbar sind, **dadurch gekennzeichnet, dass** zumindest ein Auflagemittel (7) auf dem Kopf eines anderen, sich vor dem reparaturbedürftigen Zahn befindlichen Zahns (3d) angeordnet wird, dass die Arretierungsmittel (14, 15, 16, 17) der Vorrichtung beweglich und unterhalb der Verzahnung, in gerader Linie zu den Auflagemitteln, angebracht sind, zumindest zwei Auflagemittel auf dem Profil eines, sich vor oder nach dem reparaturbedürftigen Zahn befindlichen Zahns angeordnet werden und ein Auflagemittel auf der Seite eines Zahns, der sich vor dem zu reparierenden Zahn befindet, angeordnet wird.

6. Mechanische Vorrichtung nach Anspruch 5, **dadurch gekennzeichnet, dass** diese ein ausrichtbares Schneidwerkzeug umfasst, welches entlang verschiedener Achsen verschoben werden kann und Auflagemittel sowie Arretierungsmittel zum Aufstützen auf das Zahnrad umfasst, die derart platziert werden können, dass zumindest drei Auflagemittel auf dem Kopf zumindest eines Zahns, welcher sich vor dem zu reparierenden Zahn befindet, positioniert werden, zumindest ein Auflagemittel auf der Seite eines vor dem reparaturbedürftigen Zahn befindlichen Zahns angebracht wird und zumindest zwei Auflagemittel auf der Flanke eines Referenzzahns befestigt werden und auch die beweglichen Arretierungsmittel unterhalb der Verzahnung und auf der Seite der Verzahnung, in gerader Linie zu den verschiedenen Auflagemitteln, positioniert werden.

7. Mechanische Vorrichtung nach einem der Ansprüche 5 oder 6, **dadurch gekennzeichnet, dass** deren auf das Zahnrad gestützte Auflagepunkte aus Zwischenkeilstücken aus Stahl bestehen, die an der Wiederherstellungsvorrichtung befestigt sind.
